# EUROPÄISCHE PATENTSCHRIFT

(11) **EP 4 385 332 B1**
(45) Veröffentlichungstag und Bekanntmachung des Hinweises auf die Patenterteilung: **02.12.2026**
(21) Anmeldenummer: 22213931.3
(22) Anmeldetag: 15.12.2022
(51) Int. Cl.: A23C 9/152, A23C 9/13, A23L 27/30, A23L 29/30, A23C 11/06, A23C 17/00

(54) **KALORIENARME SÜSSSPEISEN**
LOW-CALORIC DESSERTS
DESSERTS PAUVRES EN CALORIES

(43) Veröffentlichungstag der Anmeldung: 19.06.2024
(73) Patentinhaber: DMK Deutsches Milchkontor GmbH, 27404 Zeven (DE)
(72) Erfinder: Döring, Sven-Rainer, 27404 Zeven (DE); Steffens, Marco, 27404 Elsdorf (DE)
(74) Vertreter: Fabry, Bernd

(56) Entgegenhaltungen:
- WO-A1-2008/037839
- WO-A1-2008/136671
- WO-A1-2022/148871
- WO-A1-2023/057540
- US-A1- 2015 250 196

## Beschreibung

### GEBIET DER ERFINDUNG

Die vorliegende Patentanmeldung betrifft Süßspeisen enthaltend Milchkomponenten und spezielle oligomere Kohlenhydrate basierend auf Magermilch sowie die Verwendung der Kohlenhydrate als Sahneersatz.

### TECHNOLOGISCHER HINTERGRUND

Galactooligosaccharide (GOS) 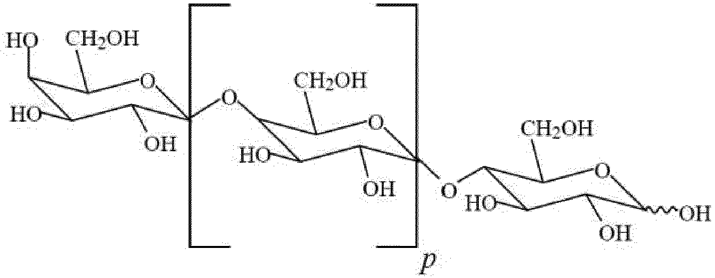 auch bekannt als Oligogalaktosyllactose, Oligogalaktose, Oligolaktose oder Transgalaktooligosaccharide (TOS), gehören zur Gruppe der Präbiotika. GOS kommt in handelsüblichen Produkten wie Nahrung für Säuglinge und Erwachsene vor.

Aufgrund der Konfiguration ihrer glykosidischen Bindungen widerstehen Galactooligosaccharide (GOS) weitgehend der Hydrolyse durch Speichel- und Darmverdauungsenzyme. Galactooligosaccharide werden daher als Präbiotika eingestuft, definiert als unverdauliche Nahrungsbestandteile, die sich vorteilhaft auf den Wirt auswirken, indem sie das Wachstum und/oder die Aktivität nützlicher Bakterien im Dickdarm stimulieren. Die erhöhte Aktivität dieser gesundheitsfördernden Bakterien führt zu einer Reihe von Effekten, sowohl direkt durch die Bakterien selbst als auch indirekt durch die organischen Säuren, die sie durch Fermentation produzieren. Beispiele für Wirkungen sind die Stimulierung der Immunfunktionen, die Aufnahme essentieller Nährstoffe, und die Synthese bestimmter Vitamine.

Galactooligosaccharide sind ein Substrat für Bakterien, wie Bifidobakterien und Laktobazillen. Studien mit Säuglingen und Erwachsenen haben gezeigt, dass mit Galakto-Oligosacchariden angereicherte Lebensmittel oder Getränke zu einer signifikanten Zunahme von Bifidobakterien führen. Diese Zucker kommen natürlich in der menschlichen Milch vor und sind als Oligosaccharide der menschlichen Milch bekannt. Beispiele sind Lakto-N-Tetraose, Lakto-N-Notetraose und Lakto-N-Fucopentaose.

Die menschliche Darmmikrobiota spielt eine Schlüsselrolle im intestinalen Immunsystem. Galactooligosaccharide unterstützen die natürlichen Abwehrkräfte des menschlichen Körpers über die Darmmikroflora, indirekt, indem sie die Anzahl der Bakterien im Darm erhöhen und die Bindung oder das Überleben von *Escherichia coli, Salmonella Typhimurium* und Clostridien hemmen. GOS können das Immunsystem indirekt durch die Produktion von antimikrobiellen Substanzen positiv beeinflussen, indem sie die Vermehrung von pathogenen Bakterien reduzieren. Verstopfung ist ein potenzielles Problem, insbesondere bei Säuglingen, älteren Menschen und schwangeren Frauen. Bei Säuglingen kann die Fütterung mit Säuglingsnahrung mit Verstopfung und hartem Stuhl assoziiert sein. GOS können die Stuhlfrequenz verbessern und die mit der Verstopfung verbundenen Symptome lindern.

Die typische Gewinnung von GOS umfasst die folgenden Schritte:
1. Konzentrierung einer Milchzuckerlösung (Lactose, Sauermolke, Milchpermeat mit dem Ziel eine Trockenmasse von mindestens 30 Gew.-% zu erreichen;
2. Hocherhitzung/UHT-Behandlung zur Entkeimung bei 85-140 C über 5 bis 300 s;
3. Zugabe des Enzyms beta Galactosidase (z.B. *Aspergillus Oryzae*) und Einstellung der für das Enzym optimalen pH- und Temperaturbedingungen (z.B. pH =4,5, 55 C);
4. Verweilzeit in der Regel über 30 bis maximal 1200 min (abhängig vom Enzym), da ansonsten eine Rückspaltung erfolgt;
5. Thermische Inaktivierung des Enzyms beispielsweise durch Hochtemperaturpasteurisierung (90 °C, 10 min)
6. Aufreinigung, gegebenenfalls Konzentrierung, Sprühtrocknung.

Eine Übersicht zur Herstellung von Galactooligosacchariden findet sich auch von *K. Zerge* in einer Online-Publikation der Universität Dresden: https://nbn-resolving.org/urn:nbn:de:bsz:14-qucosa-157121

### RELEVANTER STAND DER TECHNIK

EP 2620506 B1 (DUPONT) betrifft die Gewinnung von GOS ausgehend von Lactitol.

EP 3598901 B1 (HOCHSCHULE ANHALT) betrifft ein Verfahren zur Herstellung von GOS, bei dem man eine von L.bulgaricus (L.delbrueckii spp.bulgaricus) abgeleitete beta-Galactosidase bei einer Temperatur von 37 C oder weniger mit einer Lactose-haltigen Zusammensetzung wie Milch, Puffer oder Molke, z.B. Süßmolke, Sauermolke, Molkenkonzentrat oder Molkenpermeat, inkubiert.

EP 3041945 B1 (FRIESLAND) stellt ein Verfahren zur Herstellung von GOS aus Lactose bereit, das (i) das Inkontaktbringen einer Lactosebeschickung mit immobilisierter beta-Galactosidase (EC 3.2.1.23) und (ii) das Ermöglichen der GOS-Synthese umfasst, wobei die Lactosebeschickung eine wässrige Aufschlämmung von kristalliner Lactose ist.

WO 2008 037839 A1 (VALIO) bezieht sich auf ein Verfahren zur Herstellung von GOShaltigen Produkten auf Milchbasis durch Behandlung mit einer beta-Galactosidase.

WO 2018 048305 A1 (UNIV GRONINGEN) beschreibt die Verwendung einer GOS-Zusammensetzung, die verzweigte und lineare GOS-Spezies mit einem Polymerisationsgrad (DP) von 3 umfasst, wobei die verzweigten DP3-GOS-Spezies im Überschuss gegenüber den linearen DP3-GOS-Spezies vorhanden sind, zur Induktion von Mucin-Glykan-Verwertungswegen in nützlichen Darmbakterien in einem Tier.

WO 2018 210820 A1 (NOVOZYMES) beansprucht ein Verfahren, bei dem Milchsubstrat mit einem Laktosegehalt von mindestens 20 Gew.-% Laktose wird mit einem Enzym mit transgalaktosylierender Aktivität behandelt wird. Die transgalaktosylierende Aktivität des Enzyms kann durch Glykation von Lysin- und/oder Argininresten durch Inkubation des Enzyms mit hohen Glukosekonzentrationen bei erhöhten Temperaturen erhöht worden sein.

WO 2020 049016 A1 (FRIESLAND) bezieht sich auf das Gebiet der hypoallergenen Oligosaccharide zur Verwendung in Nahrungszusammensetzungen, insbesondere auf Oligosaccharide mit präbiotischen Eigenschaften. Es wird eine hypoallergene Oligosaccharid-Zusammensetzung bereitgestellt, die Galactooligosaccharide (GOS) umfasst, wobei (i) der Gehalt an Galactooligosacchariden (GOS) mindestens 40 Gew.-% der Gesamttrockensubstanz der Zusammensetzung beträgt; (ii) der Gehalt an Allolactose mindestens 10 Gew.-% der Gesamttrockensubstanz der Zusammensetzung beträgt; (iii) der Gehalt an 6'-GL mindestens 30 Gew.-% der Gesamt-GOS in der Zusammensetzung beträgt; und (iv) mindestens 0. 5 Gewichtsprozent des gesamten GOS einen Polymerisationsgrad (DP) von sechs oder mehr aufweisen.

WO 2020 117548 A1 (DUPONT) betrifft ein Verfahren zur Bereitstellung eines laktosearmen Produkts auf Milchbasis mit GOS-Fasern, bei dem ein Milchsubstrat mit Laktose mit einem transgalaktosylierenden Enzym behandelt wird, um GOS-Fasern und verbleibende Laktose bereitzustellen; Deaktivieren des transgalaktosylierenden Enzyms; Inkontaktbringen des Substrats auf Milchbasis mit GOS-Fasern mit einer Laktase, um die verbleibende Laktose abzubauen, um das laktosearme Produkt auf Milchbasis mit GOS-Fasern bereitzustellen, und Deaktivieren der Laktase.

WO 2020 141032 A1 (FRIESLAND) bezieht sich auf das Gebiet der Nahrungsmittelbestandteile, insbesondere auf wirtschaftlich attraktive Verfahren zur Herstellung von hypoallergenen Galactooligosacchariden (HA-GOS) und deren Verwendung in Nahrungs- und Futtermitteln. Es wird ein Verfahren zur Herstellung eines HA-GOS-Präparats bereitgestellt, das das Inkontaktbringen eines Lactose-Einsatzmaterials mit einer speziellen beta-Galactosidase (EC 3.2.1.23) umfasst, wobei das Lactose-Einsatzmaterial ein Käsemolkenpermeat (CWP) oder ein CWP ist, das mit Sialyllactose angereichert ist (SL-CWP).

WO 2022/148871 A1 offenbart ein Verfahren zur Herstellung eines Milchdessertprodukts, umfassend die Schritte des Bereitstellens eines Milchsubstrats, das Laktose enthählt, und des enzymatischen Behandelns des Milchsubstrats mit mindestens einer Beta-Galactosidase mit Transgalactosylierungsaktivität, um einen enzymatisch behandelten Milchbestandte bereitzustellen, gegebenenfalls des vollständigen oder teilweisen Inaktivierens der mindestens einen Beta-Galactosidase mit Transgalactosylierungsaktivität, und das Mischen der enzymatisch behandelten Milchzutat mit einem Teil oder allen anderen Zutaten, die für die Herstellung des Milchdessertprodukts erforderlich sind, wobei das Milchdessertprodukt ein neutrales Milchdessertprodukt ist.

### AUFGABE DER ERFINDUNG

Es besteht Bedarf an Lebensmitteln, speziell an Süßspeisen, die zwar über die Textur, die Cremigkeit und das angenehme Mundgefühl eines mit Sahne hergestellten Produktes verfügen, jedoch frei oder im Wesentlichen (kleiner 2 Gew.-%) frei von Fetten, insbesondere von Sahne und entsprechend kalorienarm oder zumindest kalorienreduziert sind.

### BESCHREIBUNG DER ERFINDUNG

Ein erster Gegenstand der Erfindung betrifft daher kalorienarme Lebensmittel, insbesondere Süßspeisen, enthaltend oder bestehend aus
(a) mindestens einer Milchkomponente , ausgewählt aus der Gruppe, die gebildet wird von Magermilch, Vollmilch, Joghurt, Buttermilch, Süßmolke, Sauermolke, Sahne, Kefir und Quark und
(b) Galactooligosacchariden (GOS) mit der Maßgabe, dass die Komponente (b) auf folgendem Wege erhalten wurde:
   (i) Bereitstellen einer wässrigen Lösung enthaltend, bestehend aus oder im Wesentlichen bestehend aus Proteinen und Lactose;
   (ii) Konzentrierung der wässrigen Lösung aus Schritt (i);
   (iii) Entkeimung der wässrigen Lösung aus Schritt (ii) durch Pasteurisierung und/ oder Mikro-/ Ultrafiltration;
   (iv) Transgalactosilierung der in der entkeimten wässrigen Lösung aus Schritt (iii) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
   (v) Desaktivierung der Enzymmasse in der Reaktionsmischung aus Schritt (iv) durch thermische Behandlung über einen Zeitraum von etwa 5 bis etwa 20 Minuten bei 85 bis 95 °C und gegebenenfalls
   (vi) Konfektionierung des so erhaltenen Produktes.

Überraschenderweise wurde gefunden, dass bei der Desaktivierung des zugegebenen Enzyms während der Herstellung von GOS-Zubereitungen aus Magermilch oder Magermilchkonzentraten, ein starker Anstieg der Viskosität zu beobachten ist, wobei das Produkt die Viskosität über die Desaktivierungszeit gesteuert werden kann. Auf diese Weise werden Produkte erhalten, die fettarm sind und dennoch eine Textur aufweisen, wie sie für fetthaltige Produkte typisch ist.

Bei der Verwendung der bisherigen Ausgangsstoffe für GOS-Zubereitungen, welche keine Proteine enthalten, führt thermische Desaktivierung der beigefügten Enzyme nicht zu einer signifikanten Erhöhung der Viskosität. Auch bei Desaktivierung der Enzyme durch pH-Änderung wird der Effekt nicht beobachtet. Es handelt sich hier folglich um ein völlig neues Produkt, das kalorienarm und fettfrei ist, jedoch große Mengen and Proteinen sowie Galactooligosaccharide enthält.

Der Kern der Erfindung besteht demnach in der überraschenden Feststellung, dass Galactooligosaccharide, die nach einem bestimmten Verfahren hergestellt werden und dabei eine gelartige Textur aufweisen, geeignet sind, als kalorienarmer Ersatz für Sahne in üblichen Süßspeisen eingesetzt zu werden, ohne dabei Einbußen bei der Produktperformance, insbesondere was Geschmack und Cremigkeit angeht, hinnehmen zu müssen.

### Milchprodukte

Die Komponente (a) ist ausgewählt aus der Gruppe, die gebildet wird von Magermilch, Vollmilch, Joghurt, Buttermilch, Süßmolke, Sauermolke, Kefir und Quark.

### Galactooligosaccharide

Als Einsatzstoffe für die Herstellung von Galactooligosaccharidzubereitungen kommen als wässrige Protein- und Lactoselösungen proteinreiche Milchzuckerlösungen auf Basis von Magermilch oder Magermilchkonzentraten in Frage, die typischerweise einen Proteingehalt von etwa 10 bis etwa 20 Gew.-% und einen Lactosegehalt von etwa 15 bis etwa 30 Gew.-% aufweisen. Wesentlich und gemeinsam ist den geeigneten Einsatzstoffen, dass sie eine ausreichende Menge an Lactose, speziell an glykosidisch gebundener Galactose besitzen und zudem einen hohen Anteil an Proteinen aufweisen.

Lactose, Milchzucker oder Laktose ist ein in Milch enthaltener Zucker.

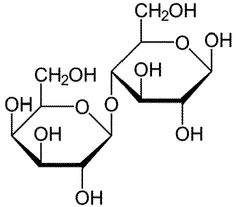

Das Disaccharid besteht aus den beiden Molekülen D-Galactose und D-Glucose, die über eine β-1,4-glycosidische Bindung miteinander verbunden sind. Nach IUPAC wird Lactose als 4-O-(β-D-Galactopyranosyl)-D-glucopyranose bezeichnet. Sie kommt als Hauptenergieträger in der Milch der Säugetiere vor. Lactose wird im Dünndarm vom Enzym Lactase verdaut, d. h. in Glucose und Galactose gespalten. In der Milch der Säugetiere sowie in Milcherzeugnissen macht Lactose fast den gesamten Anteil der Kohlenhydrate aus. Lactose, liefert Energie, unterstützt die Calcium-Resorption, hemmt Fäulnisbakterien im Darm des Menschen und begünstigt Bifidus-Bakterien (Bifidobacterium).

Molke ist die wässrige grünlich-gelbe Restflüssigkeit, die bei der Käseherstellung entsteht. Sie ist der flüssige Teil, der nach der Gerinnung der Milch zu Käse oder Quark abgesondert werden kann. Sauermolke entstehtbei der Herstellung von Sauermilchprodukten.

Es empfiehlt sich, Milchzuckerlösungen mit einer ausreichend hohen Feststoffmenge (synonym: Trockenmasse) einzusetzen, um das erfindungsgemäße Verfahren mit ökonomisch sinnvollen Umsätzen und Ausbeuten durchführen zu können. Hierzu eignen sich Lösungen, die eine Feststoffmenge von etwa 25 bis etwa 50 Gew.-% und vorzugsweise etwa 30 bis etwa 35 Gew.-% aufweisen. Gegebenenfalls können technische Milchzuckerlösungen beispielsweise durch Umkehrosmose ("reverse osmosis RO") entsprechend aufkonzentriert werden.

### Entkeimung

Im ersten Schritt des erfindungsgemäßen Verfahrens werden die wässrigen Milchzuckerlösungen entkeimt. Darunter ist jeder Prozess zu verstehen, mit dem sich die Keimlast des natürlichen Ausgangsproduktes auf einen Wert vermindern lässt, der unter dem liegt, den die jeweiligen nationalen Prüfstellen als Schwelle für die Zulassung als Lebensmittel festgelegt haben. In der Regel werden die Milchzuckerlösungen auf unter 1.000 Keime/mL entkeimt, vorzugsweise auf unter 500 Keime/mL und insbesondere etwa 10 bis etwa 50 Keime/mL. Die bevorzugte Entkeimungsmethode ist eine Hochtemperaturbehandlung, bei der die Lösungen einer Temperatur im Bereich von etwa 70 bis etwa 150 °C, vorzugsweise etwa 90 bis etwa 120 C über etwa 3 bis etwa 300 Sekunden, vorzugsweise etwa 50 bis etwa 200 Sekunden ausgesetzt werden. Alternativ kann eine Mikrofiltration durchgeführt werden. Eine Entkeimung kann entfallen, wenn bereits eine entkeimte Milchzuckerlösung eingesetzt wird.
Als Einsatzstoffe für die Herstellung von Galactooligosaccharidzubereitungen kommen als wässrige Protein- und Lactoselösungen proteinreiche Milchzuckerlösungen auf Basis von Magermilch oder Magermilchkonzentraten in Frage, die typischerweise einen Proteingehalt von etwa 10 bis etwa 20 Gew.-% und einen Lactosegehalt von etwa 15 bis etwa 30 Gew.-% aufweisen. Wesentlich und gemeinsam ist den geeigneten Einsatzstoffen, dass sie eine ausreichende Menge an Lactose, speziell an glykosidisch gebundener Galactose besitzen und zudem einen hohen Anteil an Proteinen aufweisen.

### Thermische Desaktivierung von Enzymen

Die Transgalactosilierung wird vorzugsweise solange durchgeführt, bis die höchste GOS-Konzentration erreicht ist. Dieser durch Enzym und Reaktionsbedingungen bedingte Wert kann durch Probennahme verfolgt und damit vom Fachmann leicht ermittelt werden. Ist das Maximum der GOS-Bildung erreicht, muss die Aktivität der Enzyme sehr schnell gestoppt werden, um eine Rückspaltung zu vermeiden. Dies erfolgt durch schnelle Hocherhitzung, bei der das Enzymmaterial vollständig denaturiert wird. Über die Dauer der Desaktivierung wird die Viskosität bzw. Festigkeit des Produktes eingestellt. Kurze Zeiten von 1 bis 5 Minuten begünstigen hohe Festigkeiten, während längere Zeiten von bis zu 15 Minuten zu Produkten mit gelartiger Textur führen. Erfindungsgemäß wird die Desaktivierung der Enzymmasse in der Reaktionsmischung aus Schritt (d) durch thermische Behandlung über einen Zeitraum von etwa 5 bis etwa 20 Minuten bei 85 bis 95 °C durchgeführt. Die Abtrennung der desaktivierten Enzyme ist optional und erfolgt vorzugsweise durch Filtration die vorzugsweise kontinuierlich durchgeführt wird.

### Konfektionierung

Das nach thermischer Desaktivierung und gegebenenfalls Abtrennung der deaktivierten Enzymmasse erhaltene Produkt weist eine gelartige Konsistenz auf und kann in dieser Form unmittelbar abgefüllt werden. Die eigentliche Konfektionierung kann in der Kälte bei etwa 5 bis etwa 21 °C oder vorzugsweise in der Wärme bei etwa 25 bis etwa 35°C durchgeführt werden. Anschließend werden die GOS mit den Milchkomponenten und gegebenenfalls den weiteren Zusatzstoffen vermischt und das Endprodukt in die entsprechenden Verpackungen abgefüllt.

### HILFS- UND ZUSATZSTOFFE

Die erfindungsgemäßen Süßspeisen können weiterhin Hilfs- und Zusatzstoffe enthalten, die ausgewählt sind aus der Gruppe, die gebildet wird von pflanzlichen Proteinen, pflanzlichen Fetten, Stärkeprodukten, Ballaststoffen, Verdickungsmittel, Aromastoffen, Prebiotika, Probiotika, Genusssäuren, Lab, Salzen und Farbstoffen sowie deren Gemischen.

In einer bevorzugten Ausführungsform können die Süßspeisen jeweils bezogen auf das Gesamtgewicht folgende Zusammensetzung aufweisen:
(a) etwa 50 bis etwa 80 Gew.-%, vorzugsweise etwa 60 bis 70 Gew.-% Milchkomponenten;
(b) etwa 25 bis etwa 40 Gew.-%, vorzugsweise etwa 30 bis 35 Gew.-% Galactooligosaccharide;
(c1) 0 bis etwa 10 Gew.-%, vorzugsweise etwa 2 bis etwa 5 Gew.-% pflanzliche Proteine;
(c2) 0 bis etwa 10 Gew.-%, vorzugsweise etwa 2 bis etwa 5 Gew.-% pflanzliche Fette;
(c3) 0 bis etwa 5 Gew.-%, vorzugsweise etwa 1 bis etwa 3Gew.-% Stärkeprodukte;
(c4) 0 bis etwa 5 Gew.-%, vorzugsweise etwa 1 bis etwa 2 Gew.-% Ballaststoffe;
(c5) 0 bis etwa 5 Gew.-%, vorzugsweise etwa 1 bis etwa 2 Gew.-% Emulgatoren;
(c6) 0 bis etwa 2 Gew.-%, vorzugsweise etwa 0,5 bis etwa 1 Gew.-% Verdickungsmittel;
(c7) 0 bis etwa 2 Gew.-%, vorzugsweise etwa 0,5 bis etwa 1 Gew.-% Aromastoffe;
(c8) 0 bis etwa 1 Gew.-%, vorzugsweise etwa 0,1 bis etwa 0,5 Gew.-% probiotische Mikroorganismen;
(c9) 0 bis etwa 1 Gew.-%, vorzugsweise etwa 0,1 bis etwa 0,5 Gew.-% prebiotische Stoffe;
(c10) 0 bis etwa 1 Gew.-%, vorzugsweise etwa 0,1 bis etwa 0,5 Gew.-% Genusssäuren,
(c11) 0 bis etwa 1 Gew.-%, vorzugsweise etwa 0,1 bis etwa 0,5 Gew.-% Süßstoffe;
(c12) 0 bis etwa 1 Gew.-%, vorzugsweise etwa 0,1 bis 0,5 Gew.-% Antioxidantien und/oder Vitamine;
(c13) 0 bis etwa 1 Gew.-% Lab;
(c14) 0 bis etwa 1 Gew.-% Salze;
(c15) 0 bis etwa 0,5 Gew.-% Farbstoffe;
mit der Maßgabe, dass sich die Mengenangaben gegebenenfalls mit Wasser zu 100 Gew.-% ergänzen. Nachfolgend werden die weiteren Hilfs- und Zusatzstoffe beispielhaft erläutert. Der guten Ordnung halber sei darauf hingewiesen, dass Zubereitungen, die sich auf diese Weise nicht zu 100 Gew.-% ergänzen nicht Gegenstand der Erfindung sind und es dem Fachmann auf der Grundlage der vorliegenden Beschreibung jederzeit möglich ist, Zubereitungen auszuwählen, deren Komponenten sich zu 100 Gew.-% ergänzen und die technische Lehre erfüllen.

### Pflanzliche Proteine

Pflanzliche Proteine im Sinne der Erfindung (Komponente c1) können aus Kartoffeln, Soja, Erbsen, Lupinen, Raps oder anderen proteinreichen Früchten wie z. B. Sonnenblumen- oder Kürbiskernen u. a. m. gewonnen werden. Die geernteten proteinhaltigen Früchte werden mechanisch zerkleinert und entfettet. Es entstehen Flocken oder ein proteinreiches Pulver. Anschließend wird unter Verwendung von Lösungsmitteln ein Proteinkonzentrat gewonnen, das ggf. weiter zu Proteinisolat gereinigt und aufkonzentriert wird: Die Flocken oder Mehl werden mit Wasser versetzt und angemaischt. Die proteinarmen Fasern und Feststoffe werden im nächsten Schritt mit Hilfe von Industriezentrifugen von der proteinreichen Lösung abgetrennt. Dann folgt die sogenannte Ausfällung. Hier wird der pH-Wert der proteinreichen Lösung auf den isoelektrischen Punkt eingestellt. Dadurch setzen sich die Proteinpartikel ab. Diese werden dann wiederum mittels Zentrifugen von der Lauge abgetrennt. Um alle Bestandteile der Mutterlauge aus dem ausgefällten und abgetrennten Protein zu entfernen, wird das Protein erneut mit Wasser versetzt und wieder mit Hilfe der Zentrifugalkraft abgetrennt. Bei einer Trockenextrusion wird unter Zuführung von Wärme, Druck und Hilfsstoffen ein Zwischenprodukt mit niedrigem Wassergehalt erzeugt. Diese ebenfalls geeigneten Proteine werden als TVP (Texturized Vegetable Protein) bezeichnet und haben eine trockene Konsistenz in Form von Körnern, Streifen oder Flocken. Bei einer Nassextrusion wird alternativ mit einem höheren Wassergehalt operiert. Die Feuchtigkeit des Zwischenproduktes liegt daher näher am Wassergehalt des Endproduktes. Das Zwischenprodukt wird als HMMA (High Moistured Meat Analogues) bezeichnet.

### Pflanzliche Fette

Pflanzenfette (Komponente c2) stelle Lipide dar, die im Wesentlichen gesättigte Fettsäuren enthalten und daher bei Umgebungstemperatur fest vorliegen. Zu den festen Pflanzenfetten zählen vor allem Kokosfett, Palmfett, Palmkernfett und Sheabutter.

### Stärkeprodukte

Im Sinne der vorliegenden Erfindungen umfasst der Begriff Stärkeprodukte, (Komponente c3) bilden natürliche Stärken ebenso wie chemisch oder enzymatisch modifizierte Stärken, sofern diese für die menschliche Ernährung zugelassen sind sowie Dextrine.

**Kartoffelstärke.** Kartoffeln enthalten etwa 75 % Wasser, 21 % Stärke und 4 % andere Substanzen. Zur Herstellung von Kartoffelstärke werden sie traditionell auf schnell rotierenden, mit Sägezähnen besetzten Zylindern unter Zufluss von Wasser möglichst fein zerrieben. Daraufhin wäscht man den Brei, in welchem die Zellen möglichst vollständig zerrissen, die Stärkekörner also bloßgelegt sein sollten, aus einem Metallsieb, auf dem Bürsten langsam rotieren, mit Wasser aus. Bei größeren Betrieben benutzt man kontinuierlich wirkende Apparate, bei denen der Brei durch eine Kette allmählich über ein langes, geneigt liegendes Sieb transportiert und dabei ausgewaschen und das auf den schon fast erschöpften Brei fließende Wasser, welches also nur sehr wenig Stärkemehl aufnimmt, auch noch auf frischen Brei geleitet wird. Der ausgewaschene Brei (Pülpe) enthält 80-95 % Wasser, in der Trockensubstanz aber noch etwa 60 % Stärke und dient als Viehfutter, auch zur Stärkezucker-, Branntwein- und Papierherstellung; das Waschwasser hat man zum Berieseln der Wiesen benutzt, doch gelang es auch, die stickstoffhaltigen Bestandteile des Kartoffelfruchtwassers als Viehfutter zu verwerten. Da die Pülpe noch sehr viel Stärke enthält, zerreibt man sie zwischen Walzen, um alle Zellen zu öffnen, und wäscht sie noch einmal aus. Nach einer anderen Methode schneidet man die Kartoffeln in Scheiben, befreit sie durch Mazeration in Wasser von ihrem Saft und schichtet sie mit Reisigholz oder Horden zu Haufen, in welchen sie bei einer Temperatur von 30-40 °C in etwa acht Tagen vollständig verrotten und in eine lockere, breiartige Masse verwandelt werden, aus welcher die Stärke leicht ausgewaschen werden kann. Das von den Sieben abfließende Wasser enthält die Saftbestandteile der Kartoffeln gelöst und Stärke und feine Fasern, die durch das Sieb gegangen sind, suspendiert. Man rührt dieses Wasser in Bottichen auf, lässt es kurze Zeit stehen, damit Sand und kleine Steinchen zu Boden fallen können, lässt es dann durch ein feines Sieb fließen, um gröbere Fasern zurückzuhalten, und bringt es dann in einen Bottich, in welchem sich die Stärke und auf ihr die Faser ablagert. Die obere Schicht des Bodensatzes wird deshalb nach dem Ablassen des Wassers entfernt und als Schlammstärke direkt verwertet oder weiter gereinigt, indem man sie auf einem Schüttelsieb aus feiner Seidengaze, durch deren Maschen die Stärke, aber nicht die Fasern hindurchgehen, mit viel Wasser auswäscht. Die Hauptmasse der Stärke wird im Bottich wiederholt mit reinem Wasser angerührt und nach jedesmaligem Absetzen von der oberen unreinen Stärke befreit. Man kann auch die rohe Stärke mit Wasser durch eine sehr schwach geneigte Rinne fließen lassen, in deren oberem Teil sich die schwere reine Stärke ablagert, während die leichteren Fasern von dem Wasser weiter fortgeführt werden.

Oft benutzt man auch Zentrifugalmaschinen, in welchen sich die schwere Stärke zunächst an der senkrechten Wand der schnell rotierenden Siebtrommel ablagert, während die leichte Faser noch im Wasser suspendiert bleibt. Das Wasser aber entweicht durch die Siebwand, und man kann schließlich die Stärke aus der Zentrifugalmaschine in festen Blöcken herausheben, deren innere Schicht die Faser bildet. Die feuchte (grüne) Stärke, welche etwa 33-45 % Wasser enthält, wird ohne weiteres zu Traubenzucker verarbeitet, für alle anderen Zwecke aber auf Filterpressen oder auf Platten aus gebranntem Gips, die begierig Wasser einsaugen, auch unter Anwendung der Luftpumpe entwässert und bei einer Temperatur unter 60 °C getrocknet. Man bringt sie in Brocken oder, zwischen Walzen zerdrückt und gesiebt, als Mehl in den Handel. Bisweilen wird die feuchte Stärke mit etwas Kleister angeknetet und durch eine durchlöcherte eiserne Platte getrieben, worauf man die erhaltenen Stängel auf Horden trocknet. Um einen gelblichen Ton der Stärke zu verdecken, setzt man ihr vor dem letzten Waschen etwas Ultramarin zu.

**Weizenstärke.** Weizenstärke wird aus weißem, dünnhülsigem, mehligem Weizen hergestellt. Dieser enthält etwa 58-64 % Stärke, außerdem etwa 10 % Kleber und 3-4 % Zellstoff, welcher hauptsächlich die Hülsen des Korns bildet. Die Eigenschaften des Klebers bedingen die Abweichungen der Weizenstärkefabrikation von der Gewinnung der Stärke aus Kartoffeln. Nach dem traditionellen Halleschen oder Sauerverfahren weicht man den Weizen in Wasser, zerquetscht ihn zwischen Walzen und überlässt ihn, mit Wasser übergossen, der Gärung, die durch Sauerwasser aus einem früheren Prozess eingeleitet wird und Essig- und Milchsäure liefert, in welcher sich der Kleber löst oder wenigstens seine zähe Beschaffenheit so weit verliert, dass man nach 10-20 Tagen in einer siebartig durchlöcherten Waschtrommel die Stärke abscheiden kann. Das aus der Trommel abfließende Wasser setzt in einem Bottich zunächst Stärke, dann eine innige Mischung von Stärke mit Kleber und Hülsenteilchen (Schlichte, Schlammstärke), zuletzt eine schlammige, vorwiegend aus Kleber bestehende Masse ab. Diese Rohstärke wird ähnlich wie die Kartoffelstärke gereinigt und dann getrocknet, wobei sie zu Pulver zerfällt oder, wenn sie noch geringe Mengen Kleber enthält, die so genannte Strahlenstärke liefert, die von den Normalverbrauchern irrtümlich für besonders reingehalten wird.

Nach dem traditionellen Elsässer Verfahren wird der gequollene Weizen durch aufrechte Mühlsteine unter starkem Wasserzufluss zerquetscht und sofort ausgewaschen. Das abfließende Wasser enthält neben Stärke viel Kleber und Hülsenteilchen und wird entweder der Gärung überlassen und dann wie beim vorigen Verfahren weiterverarbeitet, oder direkt in Zentrifugalmaschinen gebracht, wo viel Kleber abgeschieden und eine Rohstärke erhalten wird, die man durch Gärung etc. weiter reinigt. Die bei diesem Verfahren erhaltenen Rückstände besitzen beträchtlich höheren landwirtschaftlichen Wert als die bei dem Halleschen Verfahren entstehenden. Will man aber den Kleber noch vorteilhafter verwerten, so macht man aus Weizenmehl einen festen, zähen Teig und bearbeitet diesen nach etwa einer Stunde in Stücken von 1 kg in einem rinnenförmigen Trog unter Zufluss von Wasser mit einer leicht kannelierten Walze. Hierbei wird die Stärke aus dem Kleber ausgewaschen und fließt mit dem Wasser ab, während der Kleber als zähe, fadenziehende Masse zurückbleibt.

**Reisstärke.** Reis enthält 70-75 % Stärke neben 7-9 % unlöslichen, eiweißartigen Stoffen, die aber durch Einweichen des Reises in ganz schwacher Natronlauge größtenteils gelöst werden. Man zerreibt den Reis dann in einer Mühle unter beständigem Zufluss schwacher Lauge, behandelt den Brei in einem Bottich anhaltend mit Lauge und Wasser, lässt kurze Zeit absetzen, damit sich gröbere Teile zu Boden senken, und zieht das Wasser, in welchem reine Stärke suspendiert ist, ab. Aus dem Bodensatz wird die Stärke in einem rotierenden Siebzylinder durch Wasser ausgewaschen, worauf man sie durch Behandeln mit Lauge und Abschlämmen vom Kleber befreit. Die zuerst erhaltene reinere Stärke lässt man absetzen, entfernt die obere unreine Schicht, behandelt das Übrige auf der Zentrifugalmaschine und trocknet die reine Stärke.

**Maisstärke.** Mais weicht man vier- bis fünfmal je 24 Stunden in Wasser von 35 °C, wäscht ihn und lässt ihn dann durch zwei Mahlgänge gehen. Das Mehl fällt in eine mit Wasser gefüllte Kufe mit Flügelrührer und gelangt aus dieser auf Seidengewebe, das nur die grobe Kleie zurückhält. Das mit der Stärke beladene, durch das Gewebe hindurchgegangene Wasser gelangt in Tröge, dann durch zwei feine Gewebe und endlich auf wenig geneigte, 80-100 m lange Schiefertafeln, auf welchen sich die Stärke ablagert. Das abfließende, nur noch Spuren von Stärke enthaltende Wasser lässt man stehen und presst den Absatz zu Kuchen, um ihn als Viehfutter zu verwenden. Besonders bevorzugt ist der Einsatz von Reisstärke oder Maisstärke.

**Dextrine.** Bei Dextrinen bzw. Maltodextrinen handelt es sich um Stärkeabbauprodukte, die von ihrer Molekülgröße her zwischen Oligosacchariden und Stärke liegen. Üblicherweise kommen sie in Form von weißem bzw. hellgelbem Pulver vor. Sie werden hauptsächlich aus Weizen-, Kartoffel-, Tapioka- und Maisstärke durch trockene Erhitzung (> 150 °C) oder unter Säureeinwirkung gewonnen. In der Natur wird Dextrin zum Beispiel von *Bacterium macerans* erzeugt. Dextrine entstehen auch durch den enzymatischen Abbau von Stärke durch Amylase können. Bevorzugt sind Dextrine mit 5 bis 20 und insbesondere 6 bis 10 Dextrose-Äquivalenten (DE-Einheiten).

### Ballaststoffe

Ballaststoffe (Komponente c4) sind weitgehend unverdauliche Nahrungsbestandteile, meistens Kohlenhydrate, welche meistens in pflanzlichen Lebensmitteln vorkommen und ein wichtiger Bestandteil der menschlichen Ernährung sind. In wiederum einer weiteren bevorzugten Ausführungsform der vorliegenden Erfindung ist der Ballaststoff ausgewählt aus der Gruppe bestehend aus Inulin, Johannisbrotkernmehl, Pektin, Dextrin, Maltodextrin, Cellulose, Lignin und Alginat oder Mischungen davon.

### Emulgatoren

Emulgatoren (Komponente c5) zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Verdickungsmittel

Verdickungsmittel (Komponente c6) sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können.

Als Verdickungsmittelkommt klassisch vor allem Gelatine in Betracht. Da tierisch basierte Produkte inzwischen vielfach unerwünscht sind, können alternativ pflanzliche Produkte verwendet werden, beispielsweise:

| | |
|---|---|
| E 400 - | Alginsäure |
| E 401 - | Natriumalginat |
| E 402 - | Kaliumalginat |
| E 403 - | Ammoniumalginat |
| E 404 - | Calciumalginat |
| E 405 - | Propylenglycolalginat |
| E 406 - | Agar Agar |
| E 407 - | Carrgeen, Furcelleran |
| E 407 - | Johannisbrotkernmehl |
| E 412 - | Guarkernmehl |
| E 413 - | Traganth |
| E 414 - | Gummi arabicum |
| E 415 - | Xanthan |
| E 416 - | Karaya (Indischer Traganth) |
| E 417 - | Tarakernmehl (Peruanisches Johannisbrotkernmehl) |
| E 418 - | Gellan |
| E 440 - | Pektin, Opekta |
| E 440ii - | Amidiertes Pektin |
| E 460 - | Mikrokristalline Cellulose, Cellulosepulver |
| E 461 - | Methylcellulose |
| E 462 - | Ethylcellulose |
| E 463 - | Hydroxypropylcellulose |
| E 465 - | Methylethylcellulose |
| E 466 - | Carboxymethylcellulose, Natriumcarboxymethylcellulose |

### Aromastoffe

Die erfindungsgemäßen Lebensmittel können einen oder mehrere Aromastoffe (Komponente c7) enthalten. Typische Beispiele umfassen: Acetophenon, Allylcapronat, alpha-lonon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methyl-pyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Die Aromastoffe können auch in fester oder pastöser Form, beispielsweise als getrocknete Würzmischungen oder kleingeschnittene Kräuter zugegeben werden.

### Probiotische Mikroorganismen

Probiotische Mikroorganismen, auch als "Probiotics" bezeichnet (Komponente c8) stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, Kapseln, Pulver und Sachets erhältlich, die die Mikroorganismen in gefriergetrockneter Form enthalten. Tabelle A gibt einen Überblick über handelsübliche Probiotics und den zugehörigen Auslobungen zur Gesundheit, die im Sinne der vorliegenden Erfindung als Komponente (b1) eingesetzt werden können.

**Tabelle A**

| Probiotische Stoffe | | | |
|---|---|---|---|
| **Stamm** | **Bezeichnung** | **Hersteller** | **Auslobung** |
| *Bacillus coagulans* GBI-30, 6086 | GanedenBC | Ganeden Biotech | Steigert die Immunantwort bei viraler Infektion |
| *Bifidobacterium animalis* subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infantis* 35624 | Align | Procter & Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden |
| *Lactobacillus paracasei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus plantarum* 299v | GoodBelly/ ProViva/ProbiM age | Probi | Könnte IBS Symptome verbessern; jedoch noch mehr Studien erforderlich. |
| *Lactobacillus reuteri* American Type Culture Collection\|ATTC 55730 *(Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 *& Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei 8700:2* | Bravo Friscus/ ProbiFrisk | Probi | Derzeit laufen Untersuchungen zur Wirksamkeit gegen Erkältungs-erkrankungen. |

Zwei weitere Formen von Milchsäurebakterien, nämlich *Lactobacillus bulgaricus und Streptococcus thermophilus* eignen sich ebenfalls als Prebiotics. Auch spezielle fermentierte Produkte auf Basis solcher Milchsäurebakterien sind einsetzbar, wie beispielsweise Mixed Pickles, fermentierte Bohnenpaste wie beispielsweise tempeh, miso and doenjang; Kefir; Buttermilch, Kimchi; Pao cai; Sojasoße oder Zha cai.

### Prebiotische Stoffe

In einer weiteren Ausgestaltung der Erfindung können die Zubereitungen des Weiteren Prebiotische Stoffe ("Prebiotika") (Komponente c9) enthalten. Prebiotika werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind, nämlich insbesondere
- Fructooligosaccharide
- Inuline
- Isomaltooligosaccharide
- Lactilol
- Lactulose
- Pyrodextrine
- Sojaoligosaccharide
- Xylooligosaccharide
- Transgalactooligosaccharide sowie
- Spezielle Biopolymere

Fructooligosaccharide oder abgekürzt FOS, umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

Inuline zählen zu einer Gruppe von natürlich vorkommenden Fructose enthaltenden Oligosacchariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucose Einheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im Nahrungsmittelbereich Anwendung finden, liegt bei 10 bis 12. Inuline stimulieren ebenfalls das Wachstum von Bifidobakterien im Dickdarm.

Isomaltooligosaccharide stellen eine Mischung von alpha-D-verknüpften Glucoseoligomeren, einschließlich Isomaltose, Panose, Isomaltotetraose, Isomaltopentaose, Nigerose, Kojibiose, Isopanose und höherer verzweigter Oligosaccharide dar. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galac-topyranosyl)-D-glucitol bekannt. Der medizinische Anwendungsbereich von Lactilol in den USA ist wegen fehlender Studien beschränkt; in Europa wird es vorzugsweise als Süßstoff eingesetzt.

Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten Lebensmitteln weit verbreitet, insbesondere auch als Zusatzstoff für Joghurts. Lactosucrose wird derzeit auch in den USA für einen ähnlichen Anwendungszweck getestet.

Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

Pyrodextrine umfassen eine Mischung von Glucose enthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

Sojaoligosaccharide sind spezielle Saccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

### Genusssäuren

Der Begriff "Genusssäure" (Komponente c10) bezeichnet organische Säuren, Fruchtsäuren oder Phosphorsäuren, welche aufgrund ihres Geschmacks und anderer lebensmitteltechnisch vorteilhaften Eigenschaften als Zusatzstoffe, speziell als Lebensmittelsäuren oder Säureregulatoren in der Lebensmittelproduktion eingesetzt werden, wie beispielsweise:

| | |
|---|---|
| E 260 - | Essigsäure |
| E 270 - | Milchsäure |
| E 290 - | Kohlendioxid |
| E 296 - | Apfelsäure |
| E 297 - | Fumarsäure |
| E 330 - | Citronensäure |
| E 331 - | Natriumcitrat |
| E 332 - | Kaliumcitrat |
| E 333 - | Calciumcitrat |
| E 334 - | Weinsäure |
| E 335 - | Natriumtartrat |
| E 336 - | Kaliumtartrat |
| E 337 - | Natrium-Kaliumtartrat |
| E 338 - | Phosphorsäure |
| E 353 - | Metaweinsäure |
| E 354 - | Calciumtartrat |
| E 355 - | Adipinsäure |
| E 363 - | Bernsteinsäure |
| E 380 - | Triammoniumcitrat |
| E 513 - | Schwefelsäure |
| E 574 - | Gluconsäure |
| E 575 - | Glucono-delta-Lacton |

Vorzugsweise, im Rahmen der vorliegenden Erfindung, sind die Genusssäuren ausgewählt aus der Gruppe bestehen aus Milchsäure, Weinsäure, Essigsäure, Apfelsäure, Zitronensäure oder Fumarsäure. Auch wenn ein erfindungsgemäßes Lebensmittelprodukt solche Genusssäuren, die im Rahmen der vorliegenden Erfindung gegebenenfalls (auch) aufgrund ihres Geschmacks eingesetzt werden, enthalten kann, sind die Genusssäuren im Rahmen des vorliegenden Textes nicht dem "Aromastoff" im Sinne des Anspruchswortlauts zuzuordnen (für bevorzugt zu verwendende Aromastoffe s. unten). Solche (weiteren) Aromastoffe sind also stets zusätzlich enthalten.

### Süßstoffe

Die Süßspeisen können des Weiteren Süßstoffe (Komponente c11) enthalten. Da es sich um kalorienarme oder wenigstens kalorienreduzierte Lebensmittel handelt, ist es zwar möglich, zum Süßen konventionellen Zucker einzusetzen, es ist jedoch weniger bevorzugt. Stattdessen werden vorzugsweise pflanzliche Alternativen eingesetzt.

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch
- synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, insbesondere A und D, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) sowie Rubus Extrakte.

### Antioxidantien und Vitamine

In einer weiteren Ausführungsform der vorliegenden Erfindung können die Produkte als weitere fakultative Gruppe von Zusatzstoffen Antioxidantien und/oder Vitamine (Komponente c12) enthalten.

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propylgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

### Salze

Als Salze (Komponente c14) kommen Natriumchlorid, Magnesiumchlorid und Kaliumchlorid in Frage.

### Lebensmittelfarbstoffe

Lebensmittelfarbstoffe oder kurz Farbstoffe (Komponente c15) sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentischen Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

Die erfindungsgemäßen Süßspeisen können weiterhin in stückiger oder feinverteilter Form Schokolade, Kakao, Nüsse oder Früchte enthalten.

Vorzugsweise handelt es sich bei den erfindungsgemäßen Süßspeisen um Quarkspeisen, Joghurtprodukte, Kefirprodukte oder Puddings (einschließlich solchen in Form von Mousse). Die Süßspeisen zeichnen sich ferner dadurch aus, dass sie einen Zuckeranteil von weniger als 2 Gew.-% aufweisen und/oder essentiell (kleiner 2 Gew.-%) frei von Sahne sind.

### GEWERBLICHE ANWENDBARKEIT

Ein weiterer Gegenstand der vorliegenden Erfindung betrifft die Verwendung Von Galactooligosacchariden, hergestellt wie oben beschrieben, als Sahneersatz.

### BEISPIELE

### Vergleichsbeispiel V1

### Desaktivierung der Enzymmasse durch pH-Shift

1000 kg einer Magermilch mit 30-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit beta-Galactosidase aus *Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wurde das spätere Viskositätsmaximum erreicht. Der pH-Wert wurde durch Zugabe von 30 Gew.-%iger Natronlauge innerhalb von wenigen Minuten auf 10,0 eingestellt, wodurch die Aktivität des Enzyms schlagartig um 80 % verringert wurde. Es wurde kein Viskositätsanstieg beobachtet, das resultierende Produkt war flüssig und niedrigviskos.

### Formulierungsbeispiel

### Thermische Desaktivierung der Enzymmasse

1000 kg einer Magermilch mit 30-50 Gew.-% Trockenmasse wurde in einem Röhrenwärmeaustauscher über 120 Sekunden auf 98 °C erhitzt und dabei entkeimt. Die entkeimte Lösung wurde auf 50 C abgekühlt, in einen Fermenter überführt, mit beta-Galactosidase aus *Bacillus circulans* im Gewichtsverhältnis Enzym:Substrat von 1:500 versetzt und gerührt. Der Fortschritt der Transgalactosilierung wurde durch Probennahme verfolgt. Nach etwa 15 Minuten Enzymierungszeit wurde das spätere Viskositätsmaximum erreicht. Die Reaktionsmischung wurde anschließend innerhalb von 30 Sekunden auf 98 C erhitzt und dort für weitere 10 Minuten belassen. Das resultierende Endprodukt zeigte gelförmige Konsistenz.

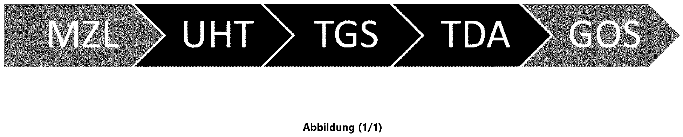

Der Prozess zur Herstellung der speziellen GOS wird ferner an Hand eines Fließschemas gemäß **Abbildung 1** näher erläutert; dabei bedeuten die Abkürzungen:
- MZL: : Milchzuckerlösung
- UHT: : Ultrahocherhitzung
- TGS: : Transgalactosilierung
- TDA: : Thermische Desaktivierung
- GOS: : Galactooligosaccharide

### Formulierungsbeispiele

Ein Sahnequark und ein Sahnepudding wurde gemäß den Komponenten in **Tabelle 1** durch Vermischen bei 20 °C hergestellt und dann für 30 Sekunden bei 100 UpM homogenisiert. Anschließend wurden Cremigkeit und Geschmack von 5 Testern beurteilt, die dabei alle zum gleichen Ergebnis kamen.

**Tabelle 1**

| **Formulierungsbeispiele (Mengenangaben als g)** | | | | |
|---|---|---|---|---|
| **Komponenten** | **Sahnequark** | | **Sahnepudding** | |
| | **V1** | **1** | **V2** | **2** |
| Vollmilch | 5 | 5 | 300 | 300 |
| Quark | 200 | 200 | | |
| Sahne | 100 | - | 200 | |
| GOS Bsp. 1 | - | 100 | | 200 |
| Stärke | - | - | 40 | 40 |
| Zucker | 2 | 2 | 2 | 2 |

| **Cremigkeit im Vergleich** | | | | |
|---|---|---|---|---|
| | Identisch | | identisch | |

| **Geschmackliche Beurteilung im Vergleich** | | | | |
|---|---|---|---|---|
| | Identisch, GOS-Produkt wird als süßer und vollmundiger empfunden | | Identisch, GOS-Produkt wird als süßer und vollmundiger empfunden | |

Demnach konnte die Menge Sahne in den Produkten gewichtsgleich gegen die speziellen GOS ausgetauscht werden ohne dass sich die Cremigkeit der Produkte änderte. Durch die GOS kam es auch nicht zu einer geschmacklichen Beeinträchtigung. Die Produkte wurden jedoch als tendenziell süßer beurteilt, was die Möglichkeit bietet, die Menge an GOS gegenüber der Menge an Sahne zu vermindern um auch den gleichen Süßungsgrad zu erreichen.

## Patentansprüche

1. Kalorienarme Süßspeisen, enthaltend oder bestehend aus
(a) mindestens einer Milchkomponente, ausgewählt aus der Gruppe, die gebildet wird von Magermilch, Vollmilch, Joghurt, Buttermilch, Süßmolke, Sauermolke, Sahne, Kefir und Quark und
(b) Galactooligosacchariden (GOS)
mit der Maßgabe, dass die Komponente (b) auf folgendem Wege erhalten wurde:
(i) Bereitstellen einer wässrigen Lösung enthaltend, bestehend aus oder im Wesentlichen bestehend aus Proteinen und Lactose;
(ii) Konzentrierung der wässrigen Lösung aus Schritt (i);
(iii) Entkeimung der wässrigen Lösung aus Schritt (ii) durch Pasteurisierung oder Mikrofiltration;
(iv) Transgalactosilierung der in der entkeimten wässrigen Lösung aus Schritt (iii) vorhandenen Milchzucker unter Zugabe mindestens einer beta-Galactosidase innerhalb deren optimalen Temperatur- und pH-Wert-Intervalls über einen Zeitraum von mindestens 30 Minuten unter Erhalt einer Reaktionsmischung,
(v) Desaktivierung der Enzymmasse in der Reaktionsmischung aus Schritt (iv) durch thermische Behandlung über einen Zeitraum von etwa 5 bis etwa 20 Minuten bei 85 bis 98 °C und gegebenenfalls
(vi) Konfektionierung des so erhaltenen Produktes.

2. Lebensmittel nach Anspruch 1, **dadurch gekennzeichnet, dass** sie weiterhin Hilfs- und Zusatzstoffe enthalten, die ausgewählt sind aus der Gruppe, die gebildet wird von pflanzlichen Proteinen, pflanzlichen Fetten, Stärkeprodukten, Ballaststoffen, Verdickungsmittel, Aromastoffen, Prebiotika, Probiotika, Genusssäuren, Lab, Salzen und Farbstoffen sowie deren Gemischen.

3. Lebensmittel nach mindestens einem der Ansprüche 1 bis 2, **dadurch gekennzeichnet, dass** sie jeweils bezogen auf das Gesamtgewicht folgende Zusammensetzung aufweisen:
(a) etwa 50 bis etwa 80 Gew.-% Milchkomponenten;
(b) etwa 5 bis etwa 60 Gew.-% Galactooligosaccharide;
(c1) 0 bis etwa 10 Gew.-% pflanzliche Proteine;
(c2) 0 bis etwa 10 Gew.-% pflanzliche Fette;
(c3) 0 bis etwa 5 Gew.-% Stärkeprodukte;
(c4) 0 bis etwa 5 Gew.-% Ballaststoffe;
(c5) 0 bis etwa 5 Gew.-% Emulgatoren;
(c6) 0 bis etwa 2 Gew.-% Verdickungsmittel;
(c7) 0 bis etwa 2 Gew.-% Aromastoffe;
(c8) 0 bis etwa 1 Gew.-% probiotische Mikroorganismen;
(c9) 0 bis etwa 1 Gew.-%, prebiotische Stoffe;
(c10) 0 bis etwa 1 Gew.-% Genusssäuren,
(c11) 0 bis etwa 1 Gew.-% Süßstoffe;
(c12) 0 bis etwa 1 Gew.-% Antioxidantien und/oder Vitamine;
(c13) 0 bis etwa 1 Gew.-% Lab;
(c14) 0 bis etwa 1 Gew.-% Salze,
(c15) 0 bis etwa 0,5 Gew.-% Farbstoffe
mit der Maßgabe, dass sich die Mengenangaben gegebenenfalls mit Wasser zu 100 Gew.-% ergänzen.

4. Lebensmittel nach mindestens einem der Ansprüche 1 bis 3, **dadurch gekennzeichnet, dass** sie weiterhin in stückiger oder feinverteilter Form Schokolade, Kakao, Nüsse oder Früchte enthalten.

5. Lebensmittel nach mindestens einem der Ansprüche 1 bis 4, **dadurch gekennzeichnet, dass** es sich um Quarkspeisen, Joghurtprodukte, Kefirprodukte oder Puddings handelt.

6. Lebensmittel nach mindestens einem der Ansprüche 1 bis 5, **dadurch gekennzeichnet, dass** sie einen Zuckeranteil von weniger als 2 Gew.-% aufweisen.

7. Lebensmittel nach mindestens einem der Ansprüche 1 bis 6, **dadurch gekennzeichnet, dass** sie essentiell frei von Sahne sind.

8. Verwendung von Galactooligosacchariden gemäß Komponente (b) nach Anspruch 1 als Sahneersatz.

## Claims

1. Low-calorie desserts containing or consisting of
(a) at least one milk component selected from the group consisting of skimmed milk, whole milk, yoghurt, buttermilk, sweet whey, sour whey, cream, kefir and quark; and
(b) galacto-oligosaccharides (GOS)
provided that component (b) has been obtained as follows:
(i) providing an aqueous solution containing, consisting of or essentially consisting of proteins and lactose;
(ii) concentrating the aqueous solution from step (i);
(iii) sterilising the aqueous solution from step (ii) by pasteurisation or microfiltration;
(iv) transgalactosylation of the lactose present in the sterilised aqueous solution from step (iii) by adding at least one beta-galactosidase within its optimal temperature and pH range for a period of at least 30 minutes, thereby obtaining a reaction mixture,
(v) Deactivation of the enzyme mass in the reaction mixture from step (iv) by thermal treatment for a period of approximately 5 to approximately 20 minutes at 85 to 95 °C and, if necessary,
(vi) Packaging of the product thus obtained.

2. A foodstuff according to claim 1, **characterised in that** it further contains excipients and additives selected from the group consisting of vegetable proteins, vegetable fats, starch products, dietary fibre, thickeners, flavourings, prebiotics, probiotics, food acids, rennet, salts and colourings, as well as mixtures thereof.

3. A foodstuff according to at least one of claims 1 to 2, **characterised in that** it has the following composition, in each case based on the total weight:
(a) from about 50 to about 80% by weight of milk components;
(b) from about 5 to about 60% by weight of galacto-oligosaccharides;
(c1) 0 to about 10% by weight of plant proteins;
(c2) 0 to about 10% by weight of plant fats;
(c3) 0 to about 5% by weight of starch products;
(c4) 0 to about 5% by weight of dietary fibre;
(c5) 0 to about 5% by weight of emulsifiers;
(c6) 0 to about 2% by weight of thickeners;
(c7) 0 to about 2% by weight of flavourings;
(c8) 0 to about 1% by weight of probiotic microorganisms;
(c9) 0 to about 1% by weight of prebiotic substances;
(c10) 0 to about 1% by weight of food acids;
(c11) 0 to about 1% by weight of sweeteners;
(c12) 0 to about 1% by weight of antioxidants and/or vitamins;
(c13) 0 to about 1% by weight of rennet;
(c14) 0 to about 1% by weight of salts,
(c15) 0 to about 0.5% by weight of colourings;
provided that the quantities are supplemented with water, where necessary, to make up 100% by weight.

4. A foodstuff according to at least one of claims 1 to 3, **characterised in that** it further contains chocolate, cocoa, nuts or fruit in chunky or finely dispersed form.

5. A foodstuff according to at least one of claims 1 to 4, **characterised in that** it comprises quark-based desserts, yoghurt products, kefir products or puddings.

6. A foodstuff according to at least one of claims 1 to 5, **characterised in that** it has a sugar content of less than 2% by weight.

7. A foodstuff according to at least one of claims 1 to 6, **characterised in that** it is essentially free from cream.

8. Use of galactooligosaccharides as per component (b) in claim 1 as a cream substitute.

## Revendications

1. Desserts hypocaloriques, contenant ou constitués de :
(a) au moins un composant laitier choisi parmi le groupe formé par le lait écrémé, le lait entier, le yaourt, le babeurre, le lactosérum doux, le lactosérum acide, la crème, le kéfir et le fromage blanc, et
(b) des galactooligosaccharides (GOS)
à condition que le composant (b) ait été obtenu de la manière suivante :
(i) préparation d'une solution aqueuse contenant, composée de ou constituée essentiellement de protéines et de lactose ;
(ii) concentrer la solution aqueuse issue de l'étape (i) ;
(iii) stériliser la solution aqueuse issue de l'étape (ii) par pasteurisation ou microfiltration ;
(iv) transgalactosylation du lactose présent dans la solution aqueuse stérilisée de l'étape (iii) par addition d'au moins une bêta-galactosidase dans sa plage optimale de température et de pH pendant une durée d'au moins 30 minutes, pour obtenir un mélange réactionnel,
(v) désactivation de la masse enzymatique dans le mélange réactionnel de l'étape (iv) par traitement thermique pendant une durée d'environ 5 à environ 20 minutes à une température comprise entre 85 et 95 °C et, le cas échéant,
(vi) conditionnement du produit ainsi obtenu.

2. Produit alimentaire selon la revendication 1, **caractérisé en ce qu'**il contient en outre des excipients et des additifs choisis parmi le groupe constitué par les protéines végétales, les graisses végétales, les produits à base d'amidon, les fibres alimentaires, les agents épaississants, les arômes, les prébiotiques, les probiotiques, les acides alimentaires, la présure, les sels et les colorants, ainsi que leurs mélanges.

3. Produit alimentaire selon au moins l'une des revendications 1 à 2, **caractérisé en ce qu'**il présente, par rapport au poids total, la composition suivante :
(a) environ 50 à environ 80 % en poids de composants laitiers ;
(b) environ 5 à environ 60 % en poids de galactooligosaccharides ;
(c1) de 0 à environ 10 % en poids de protéines végétales ;
(c2) de 0 à environ 10 % en poids de graisses végétales ;
(c3) de 0 à environ 5 % en poids de produits à base d'amidon ;
(c4) de 0 à environ 5 % en poids de fibres alimentaires ;
(c5) de 0 à environ 5 % en poids d'émulsifiants ;
(c6) de 0 à environ 2 % en poids d'épaississants ;
(c7) de 0 à environ 2 % en poids d'arômes ;
(c8) de 0 à environ 1 % en poids de micro-organismes probiotiques ;
(c9) de 0 à environ 1 % en poids de substances prébiotiques ;
(c10) de 0 à environ 1 % en poids d'acides alimentaires,
(c11) de 0 à environ 1 % en poids d'édulcorants ;
(c12) de 0 à environ 1 % en poids d'antioxydants et/ou de vitamines ;
(c13) de 0 à environ 1 % en poids de présure ;
(c14) de 0 à environ 1 % en poids de sels ;
(c15) de 0 à environ 0,5 % en poids de colorants;
à condition que les quantités indiquées soient complétées, le cas échéant, par de l'eau jusqu'à 100 % en poids.

4. Produit alimentaire selon au moins l'une des revendications 1 à 3, **caractérisé en ce qu'**il contient en outre, sous forme de morceaux ou finement dispersés, du chocolat, du cacao, des noix ou des fruits.

5. Produit alimentaire selon au moins l'une des revendications 1 à 4, **caractérisé en ce qu'**il s'agit de préparations à base de fromage blanc, de yaourts, de kéfir ou de puddings.

6. Produit alimentaire selon au moins l'une des revendications 1 à 5, **caractérisé en ce qu'**il présente une teneur en sucre inférieure à 2 % en poids.

7. Produits alimentaire selon au moins l'une des revendications 1 à 6, **caractérisés en ce qu'**il est essentiellement exempts de crème.

8. Utilisation de galactooligosaccharides selon le composant (b) de la revendication 1 comme substitut de crème.
